# EUROPÄISCHE PATENTSCHRIFT

(11) **EP 0 688 965 B1**
(45) Veröffentlichungstag und Bekanntmachung des Hinweises auf die Patenterteilung: **25.11.1998**
(21) Anmeldenummer: 95105493.1
(22) Anmeldetag: 12.04.1995
(51) Int. Cl.: F16B 31/02

(54) **Vorspannkontrollelement für Schraubanker**
Device for controlling the pre-stressing of an anchoring bolt
Dispositif pour le contrôle de la précontrainte d'un boulon d'ancrage

(30) Priorität: 23.06.1994 DE 4421959
(43) Veröffentlichungstag der Anmeldung: 27.12.1995
(73) Patentinhaber: fischerwerke Artur Fischer GmbH & Co. KG, D-72178 Waldachtal (DE)
(72) Erfinder: Haage, Manfred, Dipl.-Ing. (FH), D-72280 Dornstetten (DE)

(56) Entgegenhaltungen:
- EP-A- 0 440 011
- DE-A- 3 022 011
- FR-A- 1 326 621
- FR-A- 2 307 170
- US-A- 2 188 356
- US-A- 3 059 949
- US-A- 3 060 731
- US-A- 3 087 371
- US-A- 4 984 938

## Beschreibung

Die Erfindung betrifft ein Vorspannkontrollelement für Schraubanker gemäß Oberbegriff des Anspruchs 1.

Bei Schraubverbindungen ist es stets von wesentlicher Bedeutung, daß durch ausreichend starkes Anziehen einer Schraube die zur sicheren Befestigung erforderliche Vorspannung erzeugt wird. Eine zu hohe Vorspannung führt unter Umständen zum Bruch bei der Montage, dagegen kann eine zu niedrige Vorspannung zu Funktions- und Zuverlässigkeitsproblemen führen. In der Regel wird bei der Schraubenmontage nicht die Vorspannung, sondern allenfalls das Anzugsdrehmoment mittels eines Drehmomentschlüssels überwacht. Dies hat jedoch den Nachteil, daß das Drehmoment keinen direkten Rückschluß auf die Vorspannkraft zuläßt, da unterschiedliche Parameter großen Einfluß auf den Umsetzungsgrad zwischen Drehmoment und Vorspannkraft ausüben. So wirkt sich beispielsweise eine befettete oder mitdrehende Unterlagscheibe ebenso gravierend auf die Vorspannung aus, wie eventuell eine verschmutzte Scheibe.

Bei gleichem Anzugsmoment können durchaus Streuungen in der Vorspannkraft von +/- 50 % auftreten.

Ein weiteres Problem besteht darin, daß in der Praxis häufig auf die Verwendung von Drehmomentschlüsseln verzichtet wird, obgleich die Überwachung des Anzugsmoments vorgeschrieben ist. Dies führt zu den bekannten Nachteilen. Außerdem können die herkömmlichen Schraubanker und sonstige Schraubverbindungen nachträglich nicht daraufhin geprüft werden, ob an der jeweiligen Schraubverbindung die erforderliche Vorspannkraft vorliegt.

Aus der US-PS 2 188 356 ist ein Vorspannkontrollelement bekannt, das unterhalb des anzuziehenden Schraubenkopfes wie eine Unterlegscheibe eingesetzt wird und das aus zwei zusammenwirkenden Ringen, nämlich einem Druckring und einem Dehnring, besteht. Beim Anziehen des Schraubenkopfes wird der Dehnring vom Druckring über eine konische Ringfläche solange aufgeweitet, bis der Schraubenkopf an beiden Ringen in der Endposition zur Anlage kommt. In dieser Endposition erhöht sich dadurch das zum Weiterdrehen des Schraubenkopfes erforderliche Drehmoment. Die Erhöhung des Widerstandsmoments kann gefühlt oder mittels Sensoren festgestellt werden, so daß das Erreichen der erforderlichen Vorspannung sowohl beim Anziehen des Schraubenkopfes von Hand oder auch mittels mechanischer Schraubgeräte problemlos erkannt werden kann. Außerdem kann optisch nachgeprüft werden, ob der Schraubenkopf an beiden Ringen anliegt und damit seine Endposition erreicht hat, in der die erforderliche Vorspannung wirksam ist.

Der Erfindung liegt die Aufgabe zugrunde, ein Vorspannkontrollelement zu schaffen, welches die Erkennbarkeit des Erreichens der erforderlichen Vorspannung verbessert.

Diese Aufgabe wird durch die im Anspruch 1 angegebenen Merkmale gelöst. Das erfindungsgemäße Vorspannkontrollelement weist eine Reibungsfläche an mindestens einer Stirnfläche mindestens eines seiner beiden Ringe auf, an der das Schraubelement in der Endposition zur Anlage kommt. Auf diese Weise erhöht sich das Anzugsdrehmoment sprungartig bei Erreichen der vorgesehenen Endposition und damit bei Erreichen der erforderlichen Vorspannung. Das Erreichen der vorgesehenen Endposition ist insbesondere beim Anziehen von Hand erheblich besser spürbar. Auch wirkt das sprungartig angestiegene Drehmoment einem vorsätzlichen oder unbeabsichtigten Weiterdrehen des Schraubenkopfes entgegen.

Durch die Verwendung von mehr oder weniger massiven bzw. elastischen Dehnringen kann die Vorspannung unterschiedlich hoch gewählt werden, die in der Endposition des Schraubenkopfes an der Schraubverbindung wirksam ist.

Der Druckring kann sich am Schraubenkopf oder an dem zu befestigenden Gegenstand abstützen und kann mit einer sich konisch verjüngenden Mantelfläche in den Dehnring eingreifen und diesen beim Anziehen der Schraubverbindung aufweiten. Der Druckring kann auch direkt an der Ankerstange eines Schraubankers als Ringbund angeformt sein, wobei dann vorzugsweise an dem Dehnring Reibungsflächen zur Erhöhung der Reibung in der Endposition Verwendung finden können.

Der Druckring kann auch als im Querschnitt trapezförmiger Ring in einer entsprechend geformten Nut eines Dehnrings einliegen. Vor dem Anspannen der Schraubverbindung ragt der Dehnring über die Nut hinaus, so daß er erst mit zunehmender Vorspannung in die Nut eingedrückt wird und dabei den Dehnring radial aufweitet, bis der Schraubenkopf die Endposition erreicht hat und am Dehnring zur Anlage kommt.

Der Dehnring besteht vorzugsweise aus einem weichen, duktilen Werkstoff, während der Druckring aus einem harten vergüteten Metall bestehen kann. Die Anlageflächen zwischen beiden Ringen können mit einer Gleitbeschichtung versehen sein, um beim Anziehen der Schraubverbindung vor Erreichen der Endposition den Einfluß der Reibung zwischen den Ringen möglichst gering zu halten.

Zwischen Druck- und Dehnring kann auch eine visko-elastische Masse vorgesehen sein, die beim Anziehen des Schraubenkopfes sichtbar verformt wird. Die sichtbare Verformung kann dabei so erfolgen, daß die visko-elastische Masse bei Erreichen der Endposition über einen Kanal außen am Vorspannkontrollelement austritt und dadurch das Erreichen der Endposition optisch anzeigt.

Die Erfindung wird nachfolgend anhand von in der Zeichnung dargestellten Ausführungsbeispielen näher erläutert.

Es zeigen:
- Figur 1: eine als Schraubanker ausgebildete Schraubverbindung mit einem Vorspannkontrollelement,
- Figur 2: ein Vorspannkontrollelement, bei dem der Druckring von unten in den Dehnring eingreift,
- Figur 3: die Draufsicht auf das Vorspannkontrollelement von Figur 2,
- Figur 4: ein Ausführungsbeispiel mit am Schaft einer Ankerstange ausgebildeten Druckring,
- Figur 5: einen Halbschnitt durch ein ringförmiges Vorspannkontrollelement, bei dem der Druckring trapezförmigen Querschnitt hat.

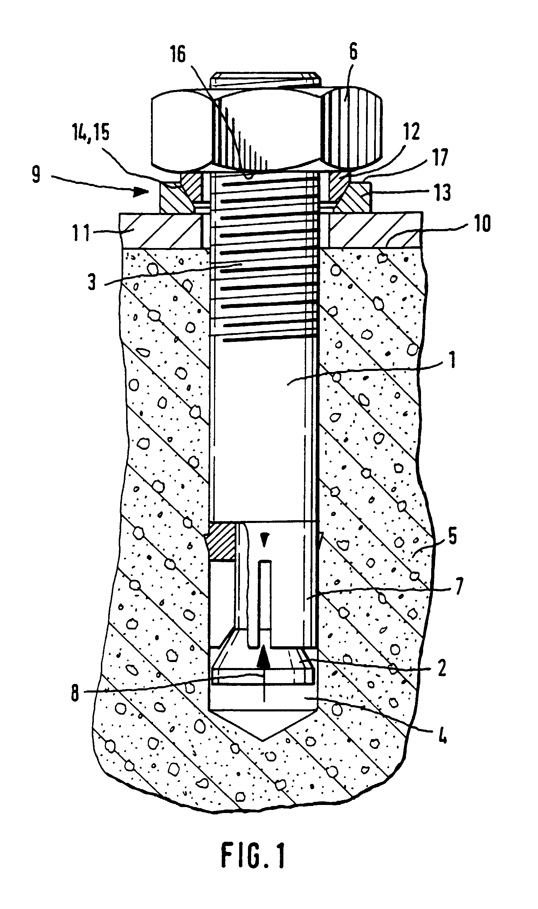

Die in Figur 1 dargestellte Schraubverbindung ist als Schraubanker ausgebildet, der eine Ankerstange 1 mit einem Spreizkonus 2 und einem Gewindeabschnitt 3 hat. Der Schraubanker 1 liegt in einem Bohrloch 4 eines Mauerwerks 5 ein. Durch Drehen einer auf dem Gewindeabschnitt 3 aufgeschraubten Schraubenmutter 6 wird der Spreizkonus 2 in eine Spreizhülse 7 in Pfeilrichtung 8 eingezogen, wodurch sich die Spreizhülse 7 aufweitet und an der Wandung des Bohrlochs 4 verspannt. Beim Anziehen der Schraubenmutter 6 stützt sich diese über ein Vorspannkontrollelement 9 ab, welches zwischen Schraubenmutter 6 und einem an der Wandoberfläche 10 zu befestigenden Gegenstand 11 positioniert ist.

Das Vorspannkontrollelement 9 besteht aus einem inneren Druckring 12 und einem äußeren Dehnring 13. Beide Ringe 12, 13 berühren sich an konischen Ringflächen 14, 15.

Beim Anziehen der Schraube 6 wird der Druckring 12 in den Dehnring 13 gedrückt, wobei über die konischen Ringflächen 14, 15 eine radiale Kraftkomponente in den Dehnring 13 eingeleitet wird. Mit zunehmend ansteigender Vorspannung weitet sich der Dehnring 13 immer weiter auf, bis die Schraubenmutter 6 mit ihrer Unterseite 16 an der Stirnfläche 17 des Dehnrings 13 zur Anlage kommt. Liegt die Schraubenmutter 6 am Dehnring 13 an, so ist die Endposition mit der erforderlichen Vorspannung erreicht.

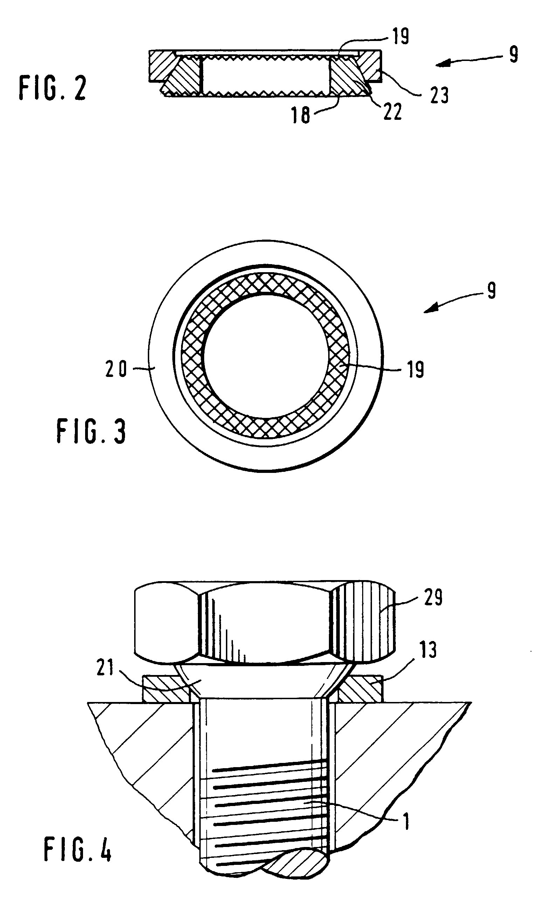

In Figur 1 ist als Schraubelement eine Schraubenmutter 6 dargestellt. Der Schraubanker könnte jedoch auch so ausgebildet sein, daß die Ankerstange 1 zusammen mit einem Schraubenkopf 29 ein einstückiges Teil bildet, wie dies in Figur 4 dargestellt ist. In diesem Fall müßte dann der Spreizkonus 2 über eine Gewindestange mit der Ankerstange 1 verbunden sein, wie dies beispielsweise in der DE 23 52 810 A1 beschrieben und dargestellt ist.

Das in Figur 2 dargestellte Vorspannkontrollelement besitzt einen Druckring 22, dessen beide Stirnflächen 18, 19 als Reibungsflächen ausgebildet sind. Wird das Vorspannkontrollelemente bei einem Schraubanker wie in Figur 1 verwendet, so liegt die Stirnfläche 18 auf dem Gegenstand 11 auf. Die Stirnfläche 19 kommt mit der Schraubenmutter 6 in Berührung, sobald die Schraubenmutter 6 im verspannten Zustand die Endposition erreicht hat. Da die Stirnfläche 19 als Reibungsfläche ausgebildet ist, kann die Schraubenmutter 6 bei Berührung dieser Reibungsfläche nur noch mit einem deutlich höheren Drehmoment weitergedreht werden. Dies bedeutet, daß die Berührung der Stirnfläche 19 und somit das Erreichen der Endposition deutlich bemerkbar ist. Durch einen seitlichen Blick auf das Vorspannkontrollelement kann das Erreichen der Endposition auch optisch problemlos kontrolliert werden.

In der Draufsicht von Figur 3 sind die Stirnflächen 19, 20 der beiden Ringe 22, 23 ersichtlich.

Bei den in Figur 4 dargestellten Ausführungsbeispiel ist der Druckring als ein an der Ankerstange 1 angeformter Ringbund 21 ausgebildet. Der Dehnring 13 entspricht dem in Figur 1 dargestellten Dehnring. Die Ankerstange 1 besitzt einen Schraubenkopf 29, der ebenso wie die Schraubenmutter 6 von Figur 1 im verspannten Zustand bei Erreichen der Endposition an dem Dehnring 13 zur Anlage kommt.

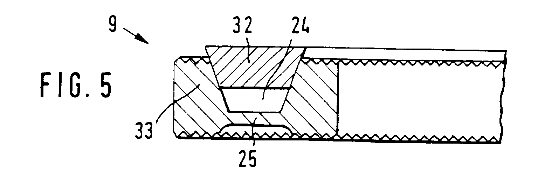

Der in Figur 5 dargestelle Halbschnitt zeigt einen Druckring 32 mit trapezförmigem Querschnitt, der in eine V-förmige Nut 24 eines aufweitbaren Dehnrings 33 eingreift. Der Nutengrund der Nut 24 wird von einer schmalen Dehnzone 25 gebildet.

Bei sämtlichen Ausführungen können die Anlageflächen zwischen den beiden Ringen des Vorspannkontrollelements mit einer Gleitbeschichtung versehen sein.

## Patentansprüche

1. Vorspannkontrollelement für Schraubanker und andere Schraubverbindungen, welches auf der Ankerstange(1) des Schraubankers zwischen einem an einer Wand (5) oder dergleichen zu befestigenden Gegenstand (11) und dem als Schraubenmutter (6) oder Schraubenkopf (18) ausgebildeten Schraubelement des Schraubankers angeordnet ist, wobei das Vorspannkontrollelement (9) aus einem formstabilen Druckring (12) und einem aufweitbaren Dehnring (13) besteht, wobei von den Anlageflächen zwischen den beiden Ringen (12, 13) wenigstens eine Anlagefläche als konische Ringfläche (14, 15) ausgebildet ist, wobei mit der von dem Schraubelement (6) gegen das Vorspannkontrollelement (9) erzeugten Spannkraft über die Anlageflächen eine radiale Kraftkomponente den Dehnring (13) aufweitet und wobei in der Endposition des Schraubelements (6) bei Erreichen der maximalen relativen Axialverschiebung zwischen Druck- und Dehnring das Schraubelement (6) an beiden Ringen (12, 13) anliegt, **dadurch gekennzeichnet,** daß an der Stirnfläche (19) des Ringes (22), an dem das Schraubelement (6) erst in der Endposition zur Anlage kommt, eine Reibungsfläche ausgebildet ist.

2. Vorspannkontrollelement nach Anspruch 1, **dadurch gekennzeichnet,** daß sich der Druckring (22) an der Oberfläche des zu befestigenden Gegenstandes (11) abstützt und eine sich konisch in Richtung Schraubelement (6) verjüngende Anlagefläche für den Dehnring (23) hat, wobei beide Stirnflächen (18, 19) des Druckrings (22) als Reibungsflächen ausgebildet sind.

3. Vorspannkontrollelement nach Anspruch 1, **dadurch gekennzeichnet,** daß der Druckring (21) als ein an der Ankerstange (1) angeformter Ringbund ausgebildet ist.

4. Vorspannkontrollelement nach Anspruch 1, **dadurch gekennzeichnet,** daß der Druckring (32) trapezförmigen Querschnitt hat und in eine an einer Stirnseite des Dehnrings umlaufende Nut (24) eingreift, so daß der Dehnring (33) beim Eindrücken des Druckrings (32) in die Nut (24) sich radial aufweitet.

5. Vorspannkontrollelement nach Anspruch 1, **dadurch gekennzeichnet,** daß die Anlageflächen (14, 15) zwischen den beiden Ringen (12, 13) mit einer Gleitbeschichtung versehen sind.

## Claims

1. Prestress-monitoring element for screw-type anchors and other screw connections, which is arranged on the anchoring rod (1) of the screw-type anchor between an article (11) to be fixed to a wall (5) or the like and the screw element of the screw-type anchor in the form of a nut (6) or screw head (18), wherein the prestress-monitoring element (9) consists of a dimensionally stable pressure ring (12) and an expansible expansion ring (13), wherein of the contact surfaces between the two rings (12, 13) at least one contact surface is in the form of a conical annular surface (14, 15), wherein using the clamping force generated by the screw-type element (6) towards the prestress-monitoring element (9), by way of the bearing surfaces, a radial force component expands the expansion ring (13), and wherein in the end position of the screw-type element (6), once the maximum relative axial displacement between pressure ring and expansion ring has been achieved, the screw-type element (6) lies against both rings (12, 13), characterized in that a frictional face is formed on the end face (19) of the ring (22) adjacent which face the screw-type element (6) lies only in the end position.

2. Prestress-monitoring element according to claim 1, characterized in that the pressure ring (22) bears against the surface of the article (11) to be fixed and has a bearing surface tapering conically in the direction of the screw-type element (6) for the expansion ring (23), both end faces (18, 19) of the pressure ring (22) being in the form of frictional faces.

3. Prestress-monitoring element according to claim 1, characterized in that the pressure ring (21) is in the form of an annular collar moulded on the anchoring rod (1).

4. Prestress-monitoring element according to claim 1, characterized in that the pressure ring (32) has a trapezoidal cross-section and engages in a circumferential groove (24) on an end face of the expansion ring so that the expansion ring (33) expands radially outwards into the groove (24) as the pressure ring (32) presses in.

5. Prestress-monitoring element according to claim 1, characterized in that the bearing surfaces (14, 15) between the two rings (12, 13) are provided with an anti-friction coating.

## Revendications

1. Dispositif de contrôle de précontrainte pour boulons d'ancrage et autres solidarisations boulonnées, implanté sur la tige d'ancrage (1) du boulon d'ancrage, entre un objet (11) devant être fixé à une paroi (5) ou structure similaire, et l'élément vissable du boulon d'ancrage qui est réalisé sous la forme d'un écrou (6) ou d'une tête de vis (18), le dispositif (9) de contrôle de précontrainte se composant d'une bague de pression (12) de forme stable, et d'une bague expansible (13) pouvant se dilater, dispositif dans lequel, parmi les surfaces de contact entre les deux bagues (12, 13), au moins une surface de contact est réalisée sous la forme d'une surface annulaire tronconique (14, 15) ; dans lequel une composante de force radiale dilate la bague expansible (13) par l'intermédiaire des surfaces de contact, sous l'effet de la force de serrage engendrée par l'élément vissable (6) contre le dispositif (9) de contrôle de précontrainte ; et dans lequel l'élément vissable (6) porte contre les deux bagues (12, 13) dans la position définitive dudit élément vissable (6), à l'instant auquel est atteint le coulissement axial relatif maximal entre les bagues de pression et expansible, caractérisé par le fait qu'une surface de frottement est ménagée à la face extrême (19) de la bague (22) contre laquelle l'élément vissable (6) vient s'appliquer uniquement dans la position définitive.

2. Dispositif de contrôle de précontrainte selon la revendication 1, caractérisé par le fait que la bague de pression (22) prend appui contre la face supérieure de l'objet (11) devant être fixé, et comporte une surface de contact qui est affectée à la bague expansible (23) et se rétrécit tronconiquement en direction de l'élément vissable (6), les deux faces extrêmes (18, 19) de la bague de pression (22) étant réalisées sous la forme de surfaces de frottement.

3. Dispositif de contrôle de précontrainte selon la revendication 1, caractérisé par le fait que la bague de pression (21) est réalisée sous la forme d'un collet annulaire faisant corps avec la tige d'ancrage (1).

4. Dispositif de contrôle de précontrainte selon la revendication 1, caractérisé par le fait que la bague de pression (32) est dotée d'une section transversale trapézoïdale et pénètre dans une rainure (24) s'étendant, périphériquement, sur une face extrême de la bague expansible, de sorte que ladite bague expansible (33) se dilate radialement lors de l'enfoncement de la bague de pression (32) dans la rainure (24).

5. Dispositif de contrôle de précontrainte selon la revendication 1, caractérisé par le fait que les surfaces de contact (14, 15), entre les deux bagues (12, 13), sont pourvues d'un revêtement de glissement.
